# FASCICULE DE BREVET EUROPEEN

(11) **EP 1 510 914 B1**
(45) Date de publication et mention de la délivrance du brevet: **13.10.2010**
(21) Numéro de dépôt: 04104134.4
(22) Date de dépôt: 27.08.2004
(51) Int. Cl.: G06F 7/58

(54) **Normalisation à flux constant d'une source de bruit pour génération de nombres aléatoires**
Konstant-Fluss-Normierung einer Rauschquelle zur Erzeugung von Zufallszahlen
Constant flux normalization of a source of noise for the generation of random numbers

(30) Priorité: 28.08.2003 FR 0350468
(43) Date de publication de la demande: 02.03.2005
(73) Titulaire: STMicroelectronics S.A., 92120 Montrouge (FR)
(72) Inventeur: Liardet, Pierre-Yvan, 13790 Peynier (FR); Teglia, Yannick, 13011 Marseille (FR); Tomei, Ambroise, 13100 Aix en Provence (FR)
(74) Mandataire: de Beaumont, Michel

(56) Documents cités:
- EP-A- 1 253 513
- GB-A- 2 204 458
- US-A- 4 958 308

## Description

La présente invention concerne le domaine des générateurs de nombres aléatoires et plus précisément les générateurs de nombres aléatoires sous la forme de flux de bits issus d'une ou plusieurs sources de bruit, numériques ou numérisées.

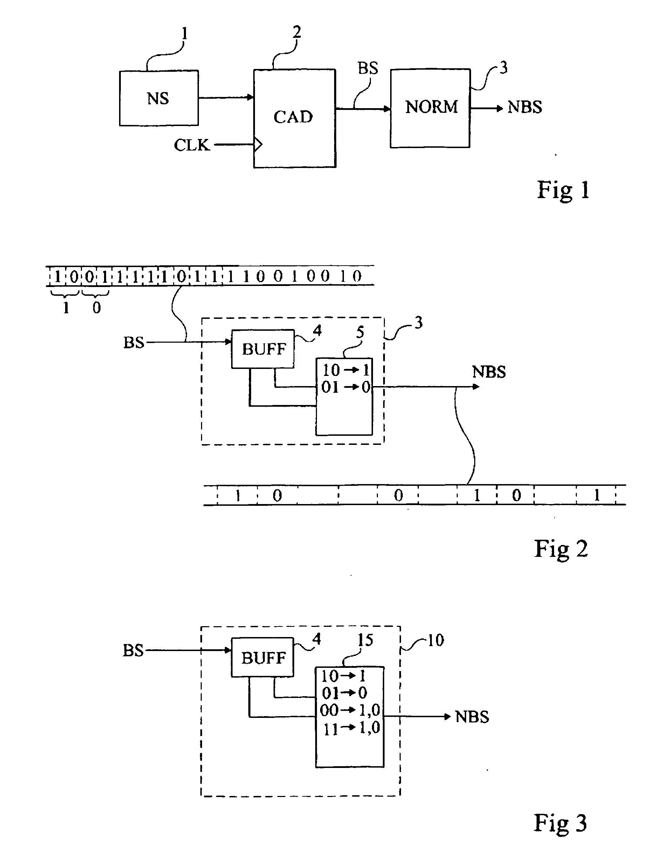

La figure 1 représente, de façon très schématique et sous forme de blocs, un exemple de générateur d'un flux de bits du type auquel s'applique la présente invention.

Un tel générateur est basé sur l'utilisation d'une source de bruit 1 (NS) fournissant un bruit analogique à un élément 2 de conversion analogique-numérique (CAD) cadencé par une horloge CLK et fournissant un flux de bits BS. La source 1 est, par exemple, constituée d'un ou plusieurs oscillateurs dont les sorties sont sommées pour fournir un bruit analogique en entrée du convertisseur 2. Le convertisseur 2 peut, de façon simplifiée, être un comparateur associé à une bascule.

La qualité d'un générateur aléatoire ou plus généralement d'une source de bruit se mesure par la qualité de son aléa, c'est-à-dire l'équiprobabilité qu'a le flux BS à fournir n'importe quel nombre et, en particulier, l'équiprobabilité de trouver dans le flux des 0 et des 1.

En pratique, le flux BS fourni par le convertisseur 2 a des risques de ne pas avoir une répartition équiprobable de ses éléments (bits ou mots de bits). En particulier, la source de bruit 1 utilise généralement des oscillateurs pour lesquels il existe un risque de synchronisation entre eux ou avec l'horloge CLK. En cas de synchronisation, l'état fourni en sortie (flux BS) reste constant.

Pour améliorer le caractère équiprobable d'un flux de bits censé être aléatoire, le flux BS traverse un circuit 3 de normalisation (NORM) fournissant un train de bit NBS modifié et dont le caractère équiprobable des zéros et des uns dans le flux est amélioré. Voir par exemple la demande de brevet EP 1,253,513.

La figure 2 représente un exemple classique de circuit 3 de normalisation d'un flux de bit BS appliquant une méthode dite de Von Neumann. Un tel circuit 3 est basé sur une analyse du flux de bits entrant BS, par paires de bits. On utilise alors un élément de mémorisation 4 (BUFF) permettant de traiter les bits, par paires, dans un circuit 5 de détermination d'état qui fournit le flux de bits normalisé NBS. D'après la méthode de Von Neumann, si la paire de bits est 10, on génère un état 1. Si la paire de bits est 01, on génère un état 0. Si la paire de bits est 00 ou 11, on l'ignore, c'est-à-dire qu'aucun état n'est généré en sortie.

Un inconvénient de la méthode de Von Neumann est que le débit du flux de bit normalisé NBS n'est pas constant, c'est-à-dire que la période avec lesquels les bits sont fournis n'est pas régulière. Dans un circuit de Von Neumann simple tel que décrit ci-dessus, le débit de bits du flux NBS varie entre deux et quatre fois moins par rapport au débit du flux d'entrée BS.

La présente invention vise à proposer une normalisation d'une source de bruit fournissant un flux de bits numérique qui améliore les solutions connues de Von Neumann.

L'invention vise plus particulièrement à rendre le débit de sortie de l'élément de normalisation constant.

L'invention vise également à accroître le débit par rapport à une normalisation de type Von Neumann.

Pour atteindre ces objets ainsi que d'autres, l'invention prévoit un procédé de normalisation d'un flux de bits initial, fourni par une source de bruit, consistant :
à découper le flux de bits en mots de longueur identique ; et
à attribuer à chaque mot de bits du flux initial un état de sortie, l'apparition d'un mot dont les bits ont tous des états identiques conduisant alternativement à l'attribution d'un premier état ou d'un second.

Selon un mode de mise en oeuvre de la présente invention, chaque mot d'états mélangés fournit un premier état et son inverse selon l'état du premier bit du mot.

Selon un mode de mise en oeuvre de la présente invention, l'alternance des états de sortie fournis pour deux mots de bits d'états identiques est indépendante des états concernés.

L'invention prévoit également un circuit de normalisation d'un flux de bits initial fourni par une source de bruit, comportant :
un élément de mémorisation du flux initial pour autoriser une exploitation des bits par mots de longueur identique ; et
un élément de détermination de l'état d'un bit de sortie en fonction de la combinaison des états de chaque mot d'entrée, l'état fourni à l'apparition d'un mot de bits d'états identiques changeant à chaque apparition d'un tel mot.

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
les figures 1 et 2 qui ont été décrites précédemment sont destinées à exposer l'état de la technique et le problème posé ; et
la figure 3 représente, de façon très schématique et sous forme de blocs, un mode de réalisation d'un circuit de normalisation selon l'invention.

Les mêmes éléments ont été désignés par les mêmes références aux différentes figures. Pour des raisons de clarté, seuls les éléments qui sont nécessaires à la compréhension de l'invention ont été représentés aux figures et seront décrits par la suite. En particulier, l'obtention du flux de bits à normaliser n'a pas été détaillée, l'invention pouvant être mise en oeuvre quel que soit ce flux et notamment qu'il ait été précédemment soumis ou non à d'autres traitements de normalisation. De même, la destination du flux de bits normalisé obtenu par l'invention est compatible avec toutes les utilisations classiques de flux de bits pour générateurs aléatoires et notamment pour une combinaison, par exemple par association en parallèle de plusieurs flux de bits, afin d'obtenir des mots aléatoires. Pour simplifier, l'invention sera décrite en relation avec un flux entrant traité par mots de deux bits consécutifs. Elle s'applique toutefois à des mots de longueur plus importante.

Une caractéristique de la présente invention est, dans une méthode de normalisation de type Von Neumann, d'attribuer un état de sortie aux mots de bits de même état. Selon l'invention, cette attribution ne s'effectue pas toujours de la même manière comme c'est le cas des mots d'états mélangés (par exemple, les paires 01 et 10), mais est inversée à chaque nouveau mot de bits d'états identiques (par exemple, les paires 00 et 11).

Contrairement à ce que l'on pensait, il est possible d'attribuer un état de sortie aux paires de bits identiques tout en gardant un flux équiprobable, en inversant les états fournis en sortie pour de tel cas.

La figure 3 représente, de façon très schématique et sous forme de blocs, un mode de réalisation d'un circuit de normalisation selon la présente invention.

Comme dans le cas classique de la figure 2, on mémorise (bloc 4, BUFF) au moins un bit du flux entrant BS, de façon à permettre un traitement des bits du flux par paires. Selon la manière dont sont traitées en pratique les paires de bits, on peut être conduit à mémoriser deux bits successifs du flux BS, voire plus.

Selon l'invention, un élément de détermination 15 d'état fournit un flux de bits de sortie normalisé NBS en fonction des états respectifs de la paire de bits courante. Par rapport à un élément classique (5, figure 2), l'élément 15 attribue un état non seulement aux paire 10 et 01, mais également aux paires 00 et 11. Selon l'invention, à chaque apparition d'une paire d'états identiques, on attribue l'état 0 ou 1 inverse de celui qui a été précédemment attribué à une paire d'états identiques. Les paires de bits ayant des états différents se voient attribuer, comme précédemment, des états 1 pour les paires 10 et des états 0 pour les paires 01 (ou inversement).

Selon un premier mode de mise en oeuvre, on tient compte indifféremment des paires d'états 00 et 11 pour procéder à cette inversion.

Avec une telle réalisation et en supposant, par exemple, qu'un état 0 sera attribué à la première apparition d'un doublon, un flux de bits entrant BS 01100001101111110100 se traduit par un flux sortant normalisé NBS 0100110100.

Selon un deuxième mode de mise en oeuvre, l'inversion est effectuée par rapport à l'état du bit de sortie attribué à une paire précédente de même type (00 ou 11).

Avec une telle réalisation et en supposant, par exemple, qu'un état 0 sera attribué à la première apparition d'un doublon 00 et qu'un état 1 sera attribué à la première apparition d'un doublon 11, un flux de bits entrant BS 01100001101111110100 se traduit par un flux sortant normalisé NBS 0100110101.

Un avantage de l'invention est que le débit du flux de bits normalisé ainsi obtenu est uniquement divisé par deux par rapport au flux d'origine.

Un autre avantage est que ce débit est constant.

Bien entendu, la présente invention est susceptible de diverses variantes et modifications qui apparaîtront à l'homme de l'art. En particulier, la mise en oeuvre pratique d'un circuit de normalisation selon l'invention, que ce soit sous forme matérielle ou logicielle, est à la portée de l'homme du métier à partir des indications fonctionnelles données ci-dessus et en utilisant des outils classiques.

De plus, bien que l'invention ait été décrite en relation avec l'exploitation de paires de bits, elle s'applique plus généralement quel que soit la longueur (paire ou impaire) des mots ou tronçons du flux entrant considéré. Par exemple, les bits entrants peuvent être traités quatre par quatre où la méthode de Von Neumann classique ne considère par les mots de quatre bits d'états identiques (0000 et 1111). L'adaptation des modes de réalisation décrits à des mots de plus de deux bits est à la portée de l'homme du métier.

## Revendications

1. Procédé de normalisation d'un flux de bits (BS) initial, fourni par une source de bruit, **caractérisé en ce qu'**il consiste :
à découper le flux de bits en mots de longueur identique ; et
à attribuer à chaque mot de bits du flux initial un état de sortie, l'apparition d'un mot dont les bits ont tous des états identiques conduisant alternativement à l'attribution d'un premier état ou d'un second.

2. Procédé selon la revendication 1, dans lequel chaque mot d'états mélangés fournit un premier état et son inverse selon l'état du premier bit du mot.

3. Procédé selon la revendication 1 ou 2, dans lequel l'alternance des états de sortie fournis pour deux mots de bits d'états identiques est indépendante des états concernés.

4. Circuit de normalisation d'un flux de bits initial (BS) fourni par une source de bruit (1), **caractérisé en ce qu'**il comporte :
un élément (4) de mémorisation du flux initial pour autoriser une exploitation des bits par mots de longueur identique ;
un élément (15) de détermination de l'état d'un bit de sortie en fonction de la combinaison des états de chaque mot d'entrée, l'état fourni à l'apparition d'un mot de bits d'états identiques changeant à chaque apparition d'un tel mot.

5. Circuit selon la revendication 4, pour la mise en oeuvre du procédé selon l'une quelconque des revendications 1 à 3.

## Claims

1. A method for normalizing an initial bit flow (BS), provided by a noise source, **characterized in that** it comprises:
dividing the bit flow into words of identical lengths; and
assigning to each bit word of the initial flow an output state, the occurrence of a word, all the bits of which have identical states, alternately resulting in the assignment of a first state or of a second one.

2. The method of claim 1, wherein each word with mixed states provides a first state and its inverse according to the state of the first bit in the word.

3. The method of claim 1 or 2, wherein the alternation of the output states provided for two words having bits with identical states is independent from the concerned states.

4. A circuit for normalizing an initial bit flow (BS) provided by a noise source (1), **characterized in that** it comprises:
an element (4) for storing the initial flow for authorizing an exploitation of the bits by words of identical length; and
an element (15) for determining the state of an output bit according to the combination of the states of each input word, the state provided upon occurrence of a word of bits of identical states switching upon each occurrence of such a word.

5. The circuit of claim 4, for the implementation of the method of any of claims 1 to 3.

## Patentansprüche

1. Verfahren zur Normalisierung eines anfänglichen Bitflusses (BS) geliefert wird durch eine Rauschquelle, **dadurch gekennzeichnet, dass** folgendes vorgesehen ist:
Unterteilung des Bitflusses in Worte identischer Längen; und
Zuweisen eines Ausgangszustandes jedem Bitwort des anfänglichen Flusses, wobei das Auftreten eines Wortes, dessen sämtliche Bits identische Zustände besitzen, alternativ die Zuweisung eines ersten Zustandes oder eines zweiten Zustandes zur Folge hat.

2. Verfahren nach Anspruch 1, wobei jedes Wort mit gemischten Zuständen einen ersten Zustand und dessen inversen Zustand aufweist, und zwar gemäß dem Zustand des ersten Bits in dem Wort.

3. Verfahren nach Anspruch 1 oder 2, wobei die Änderung der Ausgangszustände vorgesehen für zwei Worte mit Bits mit identischen Zuständen abhängig ist von den betreffenden Zuständen.

4. Schaltung zur Normalisierung eines anfänglichen Bitflusses (BS) geliefert durch eine Rauschquelle (1), **dadurch gekennzeichnet, dass** sie folgendes aufweist:
ein Element (4) zur Speicherung des anfänglichen Flusses zur Autorisierung einer Untersuchung der Bits durch Worte von identischer Länge; und
ein Element (15) zur Bestimmung des Zustands eines Ausgangsbits gemäß der Kombination bzw. als Funktion der Zustände jedes Eingangswortes, wobei der Zustand vorgesehen bei Auftreten eines Wortes von Bits von identischen Zuständen umschaltet bei jedem Auftreten eines solchen Wortes.

5. Die Schaltung nach Anspruch 4 zur Implementierung des Verfahrens irgendeines der Ansprüche 1 bis 3.
